(19) Europäisches Patentamt
European Patent Office
Office européen des brevets

(11) **EP 0 884 835 B1**

(12) **EUROPÄISCHE PATENTSCHRIFT**

(45) Veröffentlichungstag und Bekanntmachung des Hinweises auf die Patenterteilung:
**30.01.2008   Patentblatt 2008/05**

(51) Int Cl.:
***H02P 21/00*** *(2006.01)*

(21) Anmeldenummer: **98109880.9**

(22) Anmeldetag: **29.05.1998**

(54) **Verfahren und Vorrichtung zur Regelung einer geberlosen, feldorientiert betriebenen Asynchronmaschine**

Method and apparatus for the field-oriented control of a sensorless asynchronmotor

Méthode et dispositif pour contrôler par orientation de son champ un moteur asynchrone sans capteur

(84) Benannte Vertragsstaaten:
**DE FR GB IT**

(30) Priorität: **12.06.1997   DE 19724946**

(43) Veröffentlichungstag der Anmeldung:
**16.12.1998   Patentblatt 1998/51**

(73) Patentinhaber: **SIEMENS AKTIENGESELLSCHAFT**
**80333 München (DE)**

(72) Erfinder:
• **Birk, Gunther, Dipl.-Ing. (TH)**
**91054 Erlangen (DE)**

• **Holl, Eugen, Dipl.-Ing. (FH)**
**90579 Langenzenn (DE)**

(56) Entgegenhaltungen:
**EP-A- 0 330 188        EP-A- 0 598 921**
**EP-A- 0 673 110**

• **PATENT ABSTRACTS OF JAPAN vol. 095, no. 009, 31. Oktober 1995 & JP 07 143798 A (MEIDENSHA CORP), 2. Juni 1995**
• **PATENT ABSTRACTS OF JAPAN vol. 096, no. 007, 31. Juli 1996 & JP 08 080098 A (MEIDENSHA CORP), 22. März 1996**

**Beschreibung**

Die Erfindung bezieht sich auf ein Verfahren und eine Vorrichtung zur Regelung einer geberlosen, feldorientiert betriebenen Asynchronmaschine.

Aus der WO 95/03649 ist eine Zweikomponenten-Stromregelung mit einem Raumzeiger-Modulator für eine pulswechselrichtergespeiste Induktionsmaschine bekannt. Diese feldorientierte Regelung weist eine eingangsseitige Transformatoreinrichtung, einen EMK-Rechner, ein Vorsteuernetzwerk, einen Stromregelkreis, eine aktive Strom-Regelung und einen ausgangsseitigen Koordinatenwandler auf. Der eingangsseitigen Transformationseinrichtung werden zwei gemessene Phasenströme zugeführt, aus denen mit Hilfe eines Flußwinkels kathesische feldorientierte Ist-Stromkomponenten generiert werden. Diese Ist-Stromkomponenten werden einerseits dem Strom-Regelkreis und andererseits dem EMK-Rechner zugeführt. Diesem EMK-Rechner werden außerdem die Soll-Spannungskomponenten, die Parameter der Induktionsmaschine (Ständerwiderstand $R_s$, Streuinduktivität $L_\sigma$) und die Ständerfrequenz $\omega_s$ zugeführt. Ausgangsseitig ist dieser EMK-Rechner mit einem Istwert-Eingang der aktiven Strom-Regelung verknüpft, wobei am Sollwert-Eingang dieser Regelung eine feldorientierte drehmomentbildende Soll-Stromkomponente ansteht. Das Ausgangssignal dieser aktiven Strom-Regelung wird als Drehzahlkorrektur einer berechneten Schlupffrequenz verwendet, der mit einem gemessen Drehzahl-Istwert zu einer Ständerfrequenz aufaddiert wird. Der Strom-Regelkreis weist für jede feldorientierte Stromkomponente einen Vergleicher mit nachgeschalteten Regler auf, wobei an den invertierenden Eingängen jeweils ein Ausgangssignal der eingangsseitigen Transformatoreinrichtung und an den nichtinvertierenden Eingängen jeweils eine feldorientierte Soll-Stromkomponente anstehen. Die Ausgänge dieses Strom-Regelkreises sind mit den Ausgängen des Vorsteuernetzwerks verbunden, wobei eingangsseitig diesem Vorsteuernetzwerk die Soll-Stromkomponenten, die Parameter "Ständerwiderstand", "Streuinduktivität" und "Hauptinduktivität" zugeführt sind. Das Summensignal, bestehend aus feld-orientierten Vorsteuergrößen und Reglern-Stellgrößen, auch als feldorientierte Stellgröße genannt, wird dem ausgangsseitigen Koordinatenwandler zugeführt, der diese kathesischen Komponenten in polare Komponente wandelt. Diese polaren Stellgrößen-Komponenten, auch Spannungskomponenten genannt, und die Ständerfrequenz werden dem Raumzeiger-Modulator zugeführt, an dessen Ausgänge Ansteuersignale für den Pulswechselrichter anstehen.

Bei dieser feldorientierten Regelung mit Geber wird die aktive Strom-Regelung zur Korrektur der Schlupffrequenz und zur Parameteraddaption (Rotorwiderstand) benutzt. Die Schlupffrequenz wird dabei berechnet aus der drehmomentbildenden Soll-Stromkomponente und einem Quotient aus Rotorwiderstand und Soll-Fluß. Diese beiden Signale werden miteinander multipliziert, wobei das Produkt gleich der Schlupffrequenz ist. Da der Parameter "Rotorwiderstand" temperaturabhängig ist, ändert sich die Schlupffrequenz proportional zum Parameter "Rotorwiderstand". Mittels dieser aktiven Strom-Regelung kann die korrekte Schlupffrequenz bestimmt und damit maximales Drehmoment erreicht werden.

Diese Regelungsstruktur hat sich auch bei einer geberlosen Induktionsmaschine bewährt. In der feldorientierten Regelung ohne Geber wird anstelle einer aktiven Strom-Regelung eine EMK-Regelung verwendet, deren Isteingang mit einem d-Komponenten-Ausgang eines EMK-Rechners der feldorientierten Regelung verknüpft ist. Der Integralanteil des PI-Reglers dieser EMK-Regelung bildet die Drehzahl inklusiv der Schlupffrequenzkorrektur ab. Die Korrektur der Schlupffrequenz ist im Betrag bereits bei kleinen Drehzahlen vernachläßigbar. Dadurch liefert die EMK-Regelung im mittleren und hohen Drehzahlbereichen einen guten Schätzwert für die Drehzahl.

Der EMK-Rechner, mit dem in Abhängigkeit der Ist-Stromkomponenten, der Soll-Spannungskomponenten und der Maschinenparametern ein EMK-Istraumzeiger berechnet wird, benutzt das sogenannte "Spannungsmodell". Da dieses Spannungsmodell bei sehr kleinen Frequenzen wegen dem kleinen Betrag der Motorspannung sehr ungenau arbeitet, ist im Bereich um die Drehzahl Null ein feldorientierter Betrieb nicht ohne weiteres möglich. Bei Frequenz Null läßt sich dieses Verfahren nicht mehr anwenden. Insbesondere ein Reversieren ohne unerwünschte Momentenänderungen ist sehr schwierig durchführbar. Außerdem müssen Strategien zum Anfahren aus dem Stillstand und zur Verzögerung bis zum Stillstand gefunden werden.

Zur Zeit sind verschiedene Verfahren zur Realisierung des geberlosen Betriebes von Asynchronmaschinen bekannt. Im mittleren und oberen Drehzahlbereich kann der geberlose Betrieb mit den klassischen Methoden der feldorientierten Regelung zufriedenstellend realisiert werden. Für kleine Frequenzen existieren verschiedene Lösungsansätze.

Aus dem Aufsatz "Feldorientierung der geberlosen Drehfeldmaschine", abgedruckt in der DE-Zeitschrift "etz", Heft 21, 1995, Seiten 14 bis 23, ist ein Verfahren zur sensorlosen Feldorientierung von Drehfeldmaschinen bis zur Frequenz Null bekannt. Bei diesem Verfahren werden dynamische Stromsignale in der flußbildenden Stromkomponente des Statorstromes aufgeschaltet. Eine solche Aufschaltung hat dynamisch einen geringen Einfluß auf das entwickelte Drehmoment; stationär arbeitet das Modell einwandfrei. In den gemessenen Motorspannungen und -strömen wird die Wirkung dieser Anregung gemessen. Durch die Sättigungseigenschaften der Läuferstreuung kann die Lage der Rotorflußachse geschätzt werden, wodurch die Feldorientierung gewährleistet ist. Dieses Verfahren muß im oberen Drehzahlbereich durch eine geeignete feldorientierte Regelung abgelöst werden, da es nur im Sättigungsbereich der Läuferstreuung angewendet werden kann und außerdem eine ausreichende Spannungsreserve für die Aufschaltung des Testsignals benötigt. Grundsätzlich muß die verwendete Maschine ein ausgeprägtes Sättigungsverhalten der Läuferströme aufweisen. Die Realisierung dieses Verfahrens ist wegen der auftretenden Vektortransformation sehr aufwendig und damit sehr rechenzeitintensiv.

Im Aufsatz "High-Dynamic AC maschine control without speed or position sensor", abgedruckt in der Zeitschrift "ETEP", vol. 6, No. 1, Januar/Februar 1996, Seiten 47 bis 51, ist ein Verfahren angegeben, wobei das Spannungsmodell der Maschine durch das Strommodell bei kleinen Frequenzen unterstützt wird. Die Dynamik dieses Modells ist durch die Rotorzeitkonstante der Maschine begrenzt. Außerdem liefert das Strommodell nicht den für die Orientierung wichtigen Flußwinkel, sondern nur die Amplitude des Rotorflusses. Damit eignet es sich in dem genannten Ansatz nur als Beobachter zur Parameternachführung für das Spannungsmodell. Damit kann man sich prinzipiell dem Nullpunkt nähern und die Auswirkungen von thermisch bedingten Schwankungen des Statorwiderstandes eliminieren.

Der Erfindung liegt nun die Aufgabe zugrunde, ein Verfahren und eine Vorrichtung zur Regelung einer geberlosen, feldorientiert betriebenen Asynchronmaschine anzugeben, bei dem dieser Antrieb bis zum Stillstand verzögert werden kann.

Eine weitere Aufgabe besteht darin, diese geberlose, feldorientiert betriebene Asynchronmaschine aus dem Stillstand anzufahren.

Außerdem soll das erfindungsgemäße Verfahren derart weitergebildet werden, damit ein Reversieren ohne unerwünschte Momentenänderungen möglich wird.

Die erste Aufgabe wird erfindungsgemäß mit den Merkmalen des Anspruchs 1 gelöst.

Basierend auf eine feldorientierte Regelung mit einer EMK-Regelung und einer Vorsteuerung wird bei einer aus einer in Abhängigkeit einer ermittelten d-Komponente eines berechneten EMK-Raumzeigers und einer berechneten Schlupffrequenz ermittelten Ständerfrequenz kleiner gleich einer ersten Grenzfrequenz der PI-Regler dieser EMK-Regelung deaktiviert und sein Ausgangssignal stetig zu Null gesetzt. Der Wert der ersten Grenzfrequenz ist dabei sehr viel kleiner als der Nennschlupf der geberlosen, feldorientiert betriebenen Asynchronmaschine. Bei Ständerfrequenzen kleiner gleich dieser ersten Grenzfrequenz liegt ein Betrieb mit sehr kleinem Momenten-Sollwert vor, der einem Losbrechmoment einer Antriebskonfiguration entspricht, womit keine merkliche Einbuße durch das deaktivieren des EMK-Reglers mit verzögerter Nullsetzung seines Integralanteils spürbar wird.

Bei einem vorteilhaften Verfahren wird das Ausgangssignal des EMK-Reglers bei einer ermittelten Ständerfrequenz größer der ersten Grenzfrequenz abhängig von einer Solldrehrichtung einseitig auf Null begrenzt.

Somit werden für eine positive Solldrehrichtung nur positive Schätzwerte (Ausgangssignal) des PI-Reglers der EMK-Regelung zur Ermittlung der Ständerfrequenz weitergeleitet. Dadurch wird eine Fehlfunktion der EMK-Regelung in dem Bereich der ungenauen Spannungsberechnung vermieden.

Die Dynamik des PI-Reglers der EMK-Regelung und damit des Drehzahl-Schätzwertes ist aufgrund der realisierbaren Verstärkung begrenzt. Im belasteten Betrieb der Maschine ist die Dynamik bei weitem ausreichend. Sie wird bestimmt durch das resultierende Trägheitsmoment am Motorabtrieb (Trägheitsmomente des Getriebes, Steigung, Antriebsmasse ....) .

Um starke Fehlorientierungen bei Lastabwurf durch unzureichende Dynamik des PI-Reglers der EMK-Regelung zu vermeiden, wird gemäß einem weiteren vorteilhaften Verfahren die drehmomentbildende Soll-Stromkomponente in Abhängigkeit einer ermittelten Abweichung eines Beschleunigungs-Istwertes von einem Beschleunigungs-Sollwertes begrenzt. Dieser Wert kann so gesetzt werden, daß die Beschleunigungsbegrenzung nur für nicht reguläre Betriebspunkte im Eingriff ist.

Mittels dieser beschriebenen Verfahren wird ein einwandfreies Anfahren und ein Betrieb im gesamten Drehzahlbereich ermöglicht. Im Bremsbetrieb bei Fahrzeugen wird das Bremsmoment in Abhängigkeit von der Drehzahl bis zum Stillstand des Fahrzeugs auf Null reduziert, um ein sanftes Anhalten zu gewährleisten. Somit ermöglicht das erfindungsgemäße Verfahren auch diesen Anwendungsfall.

Bei einer dynamischen Drehrichtungsumkehr (Reversieren im Betrieb) ist die Beherrschung des Nulldurchgangs der Ständerfrequenz mit gegebenen Moment erforderlich. Mit dem bisher erläuterten Verfahren kann dieser Betrieb nur unzureichend bewerkstelligt werden.

Die dritte Aufgabe, nämlich ein Reversieren ohne unerwünschte Momentenänderungen, wird erfindungsgemäß dadurch gelöst, daß mit der eingangs beschriebenen feldorientierten Regelung bei Umkehrung der Soll-Drehrichtung ab einer zweiten Grenzfrequenz, deren Wert größer ist als der Wert der ersten Grenzfrequenz, die Drehzahl Null gesteuert durchfahren wird, wobei die Modelldrehzahl in Abhängigkeit des bei der zweiten Grenzfrequenz ermittelten Beschleunigungs-Istwertes verändert wird.

Dadurch, daß das Ausgangssignal des PI-Reglers der EMK-Regelung innerhalb des Drehzahlbereichs zwischen dem positiven und dem negativen Wert der zweiten Grenzfrequenz in Abhängigkeit eines zum Zeitpunkt dieser Grenzfrequenz ermittelter Beschleunigungs-Istwert gesteuert wird, wird die Ständerfrequenz mit einem gegebenen Moment durch Null geführt.

Bei einem vorteilhaften Verfahren werden während des gesteuerten Drehzahl-Nulldurchgangs Sollwertänderungen in der Mo-mentenvorgabe in äquivalente Beschleunigungs-Istwerte umgerechnet. Somit können auch Momentenänderungen während dieses Betriebes realisiert werden.

Zur weiteren Erläuterung der Erfindung wird auf die Zeichnung Bezug genommen, in der mehrere Ausführungsformen der Vorrichtung zur Durchführung der erfindungsgemäßen Regelung für eine geberlose, feldorientiert betriebenen Asynchronmaschine schematisch veranschaulicht sind.

FIG 1 zeigt ein Blockschaltbild einer ersten Ausführungsform der Vorrichtung zur Durchführung der erfindungsgemäßen Drehzahlregelung, wobei in den

FIG 2 und 3 jeweils ein Blockschaltbild einer zweiten und dritten Ausführungsform der Vorrichtung zur Durchführung der erfindungsgemäßen Drehzahlregelung dargestellt sind, in der

FIG 4 ist in einem Diagramm über der Zeit t eine gemessene Geschwindigkeit und eine berechnete Modellgeschwindigkeit dargestellt, die

FIG 5 zeigt in einem Diagramm über der Zeit t die Verläufe der drehmomentbildenden und der flußbildenden Ist-Stromkomponente der geberlosen, feldorientiert betriebenen Asynchronmaschine, in der

FIG 6 ist der Verlauf des Beschleunigungs-Istwertes in einem Diagramm über der Zeit t dargestellt und in der

FIG 7 ist in einem Diagramm über der Zeit t der Verlauf eines errechneten Drehmoments und einer gemessenen Geschwindigkeit veranschaulicht.

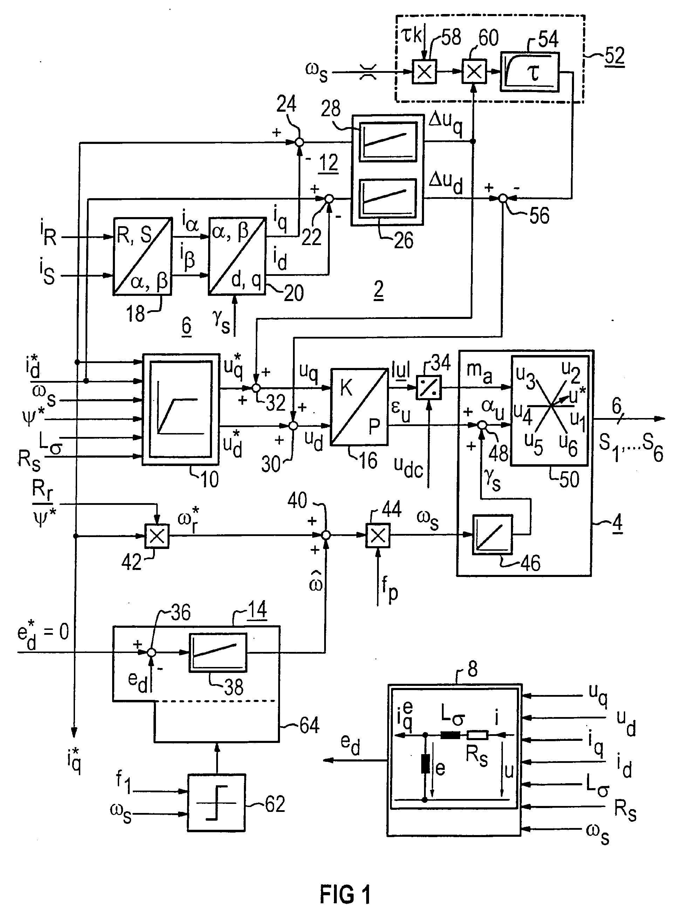

Die FIG 1 zeigt ein Blockschaltbild einer Vorrichtung zur Durchführung des erfindungsgemäßen Verfahrens zur Regelung einer geberlosen, feldorientiert betriebenen Asynchronmaschine. Diese Vorrichtung ist unterteilt in einer feldorientierten Regelung 2 und einem Raumzeiger-Modulator 4. Die feldorientierte Regelung 2 weist eine eingangsseitige Transformationseinrichtung 6, einen EMK-Rechner 8, ein Vorsteuernetzwerk 10, einen Stromregelkreis 12, eine EMK-Regelung 14 und einen ausgangsseitigen Koordinatenwandler 16 auf. Mittels der eingangsseitigen Transformationseinrichtung 6, die einen Koordinatenwandler 18 und einen Vektordreher 20 aufweist, und einer ermittelten Flußlage $\gamma_s$ werden die gemessenen Phasenströme $i_R$ und $i_S$ in eine fluß- und drehmomentbildende Ist-Stromkomponente $i_d$ und $i_q$ transformiert. Diese Ist-Stromkomponenten $i_d$ und $i_q$ werden jeweils einem Vergleicher 22 und 24 des Stromregelkreises 12 zugeführt, an deren nichtinvertierenden Eingängen jeweils eine Soll-Stromkomponente $i^*_d$ und $i^*_q$ anstehen. Ausgangsseitig ist der Vergleicher 22 bzw. 24 mit einem Stromregler 26 bzw. 28 verknüpft, der ausgangsseitig mit einem Addierer 30 bzw. 32 verbunden ist. Diese Stromregler 26 und 28 werden von dem Vorsteuernetzwerk 10 dadurch unterstützt, daß dieses Vorsteuernetzwerk 10 in Abhängigkeit von Soll-Stromkomponenten $i^*_d$ und $i^*_q$, von Parametern der Asynchronmaschine (Ständerwiderstand $R_s$, Streuinduktivität $L_\sigma$), einer ermittelten Ständerfrequenz $\omega_s$ und einem Soll-Fluß $\Psi^*$ Vorsteuergrößen $u^*_d$ und $u^*_q$ berechnet, die jeweils dem Addierer 30 bzw. 32 zugeführt werden. Somit müssen die Stromregler 26 und 28 an ihren Ausgängen nurmehr die Spannung $\Delta u_d$ und $\Delta u_q$, auch als Regler-Stellgrößen bezeichnet, liefern, die vom Vorsteuernetzwerk 10 nicht ermittelt werden, beispielsweise dynamische Anteile, Fehler etc... . Die Ausgänge der beiden Addierer 30 und 32 werden dem ausgangsseitigen Koordinatenwandler 16 zugeführt. Mit diesem Koordinatenwandler 16 werden die kathesischen Komponenten $u_d$ und $u_q$ des Stellgrößen-Raumzeigers $\underline{u}$ in polare Komponenten $|\underline{u}|$ und $\varepsilon_u$ gewandelt. Die Betragskomponente $|\underline{u}|$ wird mittels eines Dividierers 34, an dessen zweiten Eingang eine Eingangsgröße $u_{dc}$ des Pulswechselrichters ansteht, normiert. Die Ausgangsgröße $m_a$ ist der Aussteuerwert des Pulswechselrichters. Der Dividierer 34 kann auch Bestandteil des Raumzeiger-Modulators 4 sein. Die kathesischen Stellgrößen-Komponenten $u_d$ und $u_q$ und die Ist-Stromkomponenten $i_d$ und $i_q$ werden dem EMK-Rechner 8 zugeführt, dem ebenfalls die Maschinenparameter Ständerwiderstand $R_s$ und Streuinduktivität $L_\sigma$ und die ermittelte Ständerfrequenz $\omega_s$ zugeführt sind. Am Ausgang dieses EMK-Rechners 8 steht eine d-Komponente $e_d$ eines EMK-Raumzeigers $\underline{e}$ an. Da bei einer korrekten Feldorientierung der EMK-Raumzeiger $\underline{e}$ nur eine Komponente $e_q$ in der q-Achse des mit der Ständerfrequenz $\omega_s$ rotierenden d-,q-Koordinatensystem aufweist, muß die d-Komponente $e_d = 0$ sein. Diese d-Komponente $e_d$ wird der EMK-Regelung 14 zugeführt, an deren zweitem Eingang die Soll-d-Komponente $e^*_d$ ansteht, die Null ist. Diese EMK-Regelung 14 weist einen Vergleicher 36 und einen PI-Regler 38 auf.

In dieser feldorientierten Regelung 2 ohne Geber bildet der Imaginärteil des PI-Reglers 38 der EMK-Regelung 14 einen Schätzwert $\hat{\omega}$ der Geschwindigkeit des Asynchronmotors. Dieser Schätzwert $\hat{\omega}$ wird mittels eines Addierers 40 zu einem berechneten Schlupffrequenz-Sollwert $\omega^*_r$ addiert. Dieser berechnete Schlupffrequenz-Sollwert $\omega^*_r$ steht am Ausgang eines Multiplizierers 42 an, an dessen Eingängen eine drehmomentbildende Soll-Stromkomponente $i^*_q$ und ein Quotient aus Rotorwiderstand $R_r$ und Soll-Fluß $\Psi^*$ anstehen. Die Ständerfrequenz $\omega_s$ ist die Summe dieses berechneten Schlupffrequenz-Sollwertes $\omega^*_r$ und des Schätzwertes $\hat{\omega}$, wobei die Ständerfrequenz $\omega_s$ mittels eines Multiplizierers 44, an dessen zweiten Eingang die Polpaarzahl $f_p$ des Motors ansteht, womit die Umrechnung der mechanischen Drehzahl auf die elektrische Ständerfrequenz $\omega_s$ erfolgt.

Diese Ständerfrequenz $\omega_s$ wird ebenfalls im Raumzeiger-Modulator 4 zugeführt. Dieser Raumzeiger-Modulator 4 weist einen Winkelintegrator 46, einen Addierer 48 und eine Recheneinheit 50 auf. Mittels des Winkelintegrators 46 und der Ständerfrequenz $\omega_s$ wird der Flußwinkel $\gamma_s$ im ständerorientierten Koordinatensystem ermittelt, die zur Lage $\varepsilon_u$ des Stellgrößen-Raumzeigers $\underline{u}$ im flußorientierten Koordinatensystem addiert wird. Als Summe dieser beiden Winkel $\gamma_s$ und $\varepsilon_u$ erhält man die Lage $\alpha_u$ des Stellgrößen-Raumzeigers $\underline{u}$ im ständerorientierten Koordinatensystem. Aus den Signalen $m_a$ (Aussteuerwert) und $\alpha_u$ (Lage des Stellgrößen-Raumzeigers $\underline{u}$) werden mittels der Recheneinheit 50 die Ansteuersignale $S_{1...}, S_6$ für den Pulswechselrichter bestimmt.

Die bisher beschriebene feldorientierte Regelung 2 ist für eine Induktionsmaschine aus der eingangs genannten WO 95/03649 bekannt. Das Regelverfahren, daß mit dieser feldorientierten Regelung 2 durchgeführt wird, ist das Zweikomponenten-Stromregelverfahren. In dieser WO 95/03649 wird auf die Veröffentlichung verwiesen, die sich auf die Recheneinheit 50 bzw. auf das Vorsteuernetzwerk 10, das auch als Entkopplungsnetzwerk bezeichnet wird, beziehen.

Diese Zweikomponenten-Stromregelung ist um einen Querzweig 52 erweitert, der die Regler-Stellgröße $\Delta u_q$ des Stromreglers 28 über ein Verzögerungsglied 54 auf die Regler-Stellgröße $\Delta u_d$ des Stromreglers 26 mittels eines Addierers 56 aufschaltet. Den Eingängen dieses Querzweiges 52 ist jeweils ein Multiplizierer 58 und 60 nachgeschaltet, wobei am zweiten Eingang des ersten Multiplizierers 58 Koeffizienten $\tau$ und k und am zweiten Eingang des zweiten Multiplizierers 60 die Frequenzgröße des ersten Multiplizierers 58 anstehen, und wobei der Ausgang des zweiten Multiplizierers 60 mit dem Verzögerungsglied 54 verbunden ist. Durch die Einführung dieses Querzweiges wird erreicht, daß der Ausgang des Stromreglers 28 nicht nur die Wirkspannung verändert (wie bei der Zweikomponenten-Stromregelung), sondern über die Änderung der Blindspannung auch eine Drehung des Spannungszeigers bewirkt (wie bei der Wirkstromregelung). Gleichzeitig läßt sich durch diesen Querzweig 52 erreichen, daß eine Änderung der Regler-Stellgröße $\Delta u_q$ den Blindstrom nicht beeinflußt, die Regelkreise also entkoppelt sind. Die für die Zweikomponenten-Regelung typischen langsamen Ausgleichsvorgänge bei verstimmten Vorsteuernetzwerk 10 treten daher nicht mehr auf. Für eine ideale Entkopplung wird die Zeitkonstante $\tau$ des Verzögerungsgliedes 54 gleich der Kurzschlußzeitkonstante des Motors gewählt und die Verstärkung k proportional zur Ständerfrequenz veränderbar gemacht. Dieser Querzweig 52 ist aus der EP 0 633 653 A1 bekannt und dort ausführlich beschrieben, so daß an dieser Stelle nicht näher darauf eingegangen werden muß.

Diese feldorientierte Regelung 2 weist noch einen Komparator 62 auf, der ausgangsseitig mit einer Vorrichtung 64 zur Deaktivierung des PI-Reglers 38 der EMK-Regelung 14 und zur verzögerten Herabsetzung des Integralanteils dieses PI-Reglers 38 auf Null, verknüpft ist. Diese Vorrichtung 64 ist Bestandteil der EMK-Regelung 14. An den Eingängen des Komparators 62 stehen eine erste Grenzfrequenz $f_1$ und die ermittelte Ständerfrequenz $\omega_s$ an. Sobald die Ständerfrequenz $\omega_s$ kleiner gleich der ersten Grenzfrequenz $f_1$ ist, wird die Vorrichtung 64 aktiviert. Diese Vorrichtung 64 deaktiviert den PI-Regler 38 der EMK-Regelung 14 und setzt seinen Integralanteil verzögert auf Null. Dadurch wird der Schätzwert $\hat{\omega}$ und damit die Ständerfrequenz $\omega_s$ sanft zu Null. Als erste Grenzfrequenz $f_1$ wird ein Wert weit unterhalb der Nennschlupffrequenz $\omega^*_{rn}$ ($f_1 \leq 30\% \cdot \omega^*_{rn}$) vorbestimmt.

Durch diese Ergänzung der feldorientierten Regelung 2 einer geberlosen, feldorientiert betriebenen Asynchronmaschine kann nun diese Asynchronmaschine bis zum Stillstand sanft verzögert werden. Außerdem kann diese Asynchronmaschine wieder aus dem Stillstand anfahren. Beim Anfahren aus dem Stillstand bis zur ersten Grenzfrequenz $f_1$ ist die EMK-Regelung 14 gesperrt, so daß die Ständerfrequenz $\omega_s$ gleich der berechneten Schlupffrequenz $\omega^*_r$ ist. Bei Überschreitung der ersten Grenzfrequenz $f_1$ wird die Vorrichtung 64 wieder deaktiviert, so daß der PI-Regler 38 der EMK-Regelung 14 wieder aktiv ist.

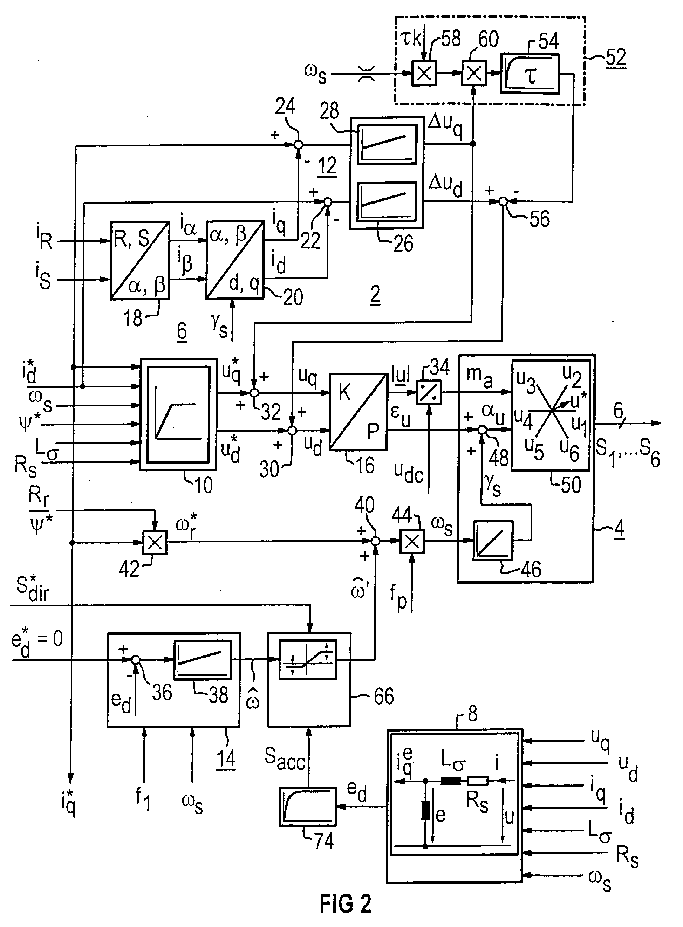

Der FIG 2 ist ein Blockschaltbild einer zweiten Ausführungsform der Vorrichtung zur Durchführung des erfindungsgemäßen Verfahrens zur Regelung einer geberlosen, feldorientiert betriebenen Asynchronmaschine dargestellt. Diese Ausführungsform unterscheidet sich von der Ausführungsform gemäß FIG 1 dadurch, daß der EMK-Regelung 14 eine Einrichtung 66 zur Begrenzung des Ausgangssignals $\hat{\omega}$ des PI-Reglers 38 der EMK-Regelung 14 nachgeschaltet ist. Diese Einrichtung 66 ist ebenfalls eine Soll-Drehrichtung $S^*_{dir}$ zugeführt. Außerdem ist ein weiterer Eingang dieser Einrichtung 66 mit einem Ausgang einer Umrechnungs-Einrichtung 74 verknüpft, die eingangsseitig mit einem d-Ausgang des EMK-Rechners 8 verbunden ist. Am Ausgang dieser Umrechnungs-Einrichtung 74 steht ein Beschleunigungs-Istwert $S_{acc}$ an, der aus der d-Komponente $e_d$ eines berechneten EMK-Raumzeigers $\underline{e}$ bestimmt ist. Aus Übersichtlichkeitsgründen sind der Komparator 62 und die Vorrichtung 64, die bevorzugt Bestandteile der EMK-Regelung 14 sind, hier nicht explizit dargestellt. Mittels der Einrichtung 66 wird der Schätzwert $\hat{\omega}$ der EMK-Regelung 14 einseitig auf Null begrenzt. Welcher Schätzwert $\hat{\omega}$ begrenzt wird, hängt von der Soll-Drehrichtung $S^*_{dir}$ ab. Für eine positive Soll-Drehrichtung $S^*_{dir}$ werden nur positive Werte des Schätzwertes $\hat{\omega}$ weitergeleitet. Dadurch wird erreicht, daß, nachdem der PI-Regler 38 der EMK-Regelung 14 wieder aktiv ist, Fehler der EMK-Regelung 14 infolge der noch ungenauen Spannungsberechnung nicht zur Bestimmung der Ständerfrequenz $\omega_s$ weiterverwendet werden.

Die Dynamik des PI-Reglers 38 der EMK-Regelung 14 und damit der Schätzwert $\hat{\omega}$ ist aufgrund der realisierbaren Verstärkung begrenzt. Im belasteten Betrieb der Asynchronmaschine ist die Dynamik dieser EMK-Regelung 14 bei weitem ausreichend. Sie wird bestimmt durch das resultierende Trägheitsmoment am Motorabrieb (Trägheitsmoment des Getriebes, Steigung, Fahrzeugmasse ...).

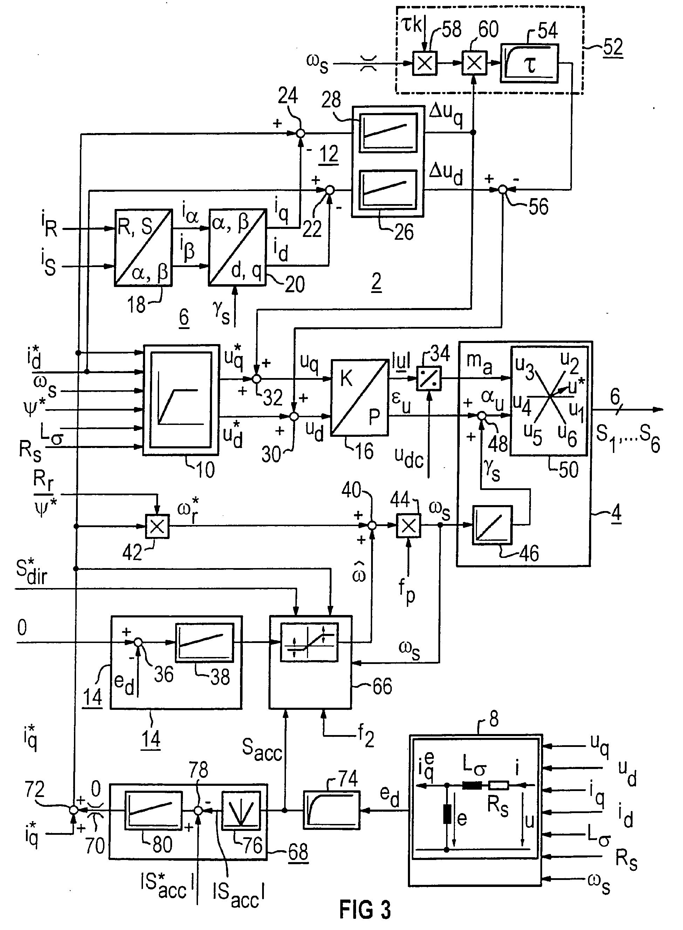

Damit bei Laständerung nahe der Frequenz Null durch die unzureichende Dynamik des PI-Reglers 38 der EMK-Regelung 14 keine starken Fehlorientierungen der Regelung entsteht, ist dieser Einrichtung 66 gemäß der FIG 3 ein Beschleunigungs-Istwert $S_{acc}$ zugeführt. Diese FIG 3 zeigt eine weitere vorteilhafte Ausführungsform der Vorrichtung zur Durchführung des erfindungsgemäßen Verfahrens zur Regelung einer geberlosen, feldorientiert betriebenen Asynchronmaschine. Außerdem ist dieser Beschleunigungs-Istwert $S_{acc}$ einer Beschleunigungs-Regeleinrichtung 68 zugeführt, die ausgangsseitig über eine Begrenzereinrichtung 70 mit einem Addierer 72 verknüpft ist. Der Beschleunigungs-Istwert $S_{acc}$ wird mittels einer Umrechnungs-Einrichtung 74 aus der d-Komponente $e_d$ des EMK-Raumzeigers $\underline{e}$ bestimmt.

Die Beschleunigungs-Regeleinrichtung 68 weist einen Betragsbildner 76, einen Vergleicher 78 und einen PI-Regler 80 auf. Der Betragsbildner 76 ist eingangsseitig angeordnet, dem eingangsseitig der ermittelte Beschleunigungs-Istwert $S_{acc}$ zugeführt ist. Ausgangsseitig ist dieser Betragsbildner 76 mit einem invertierenden Eingang des Vergleichers 78 verbunden. Ausgangsseitig ist dieser Vergleicher 78 mit dem PI-Regler 80 der Beschleunigungs-Regeleinrichtung 68 verbunden. Am nichtinvertierenden Eingang des Vergleichers 78 steht ein Betrag $|S^*_{acc}|$ eines Beschleunigungs-Grenzwertes $S^*_{acc}$ an. Der Ausgang des PI-Reglers 80 ist über der Begrenzereinrichtung 70 mit dem Addierer 72 verbunden, an dessen zweiten Eingang eine drehmomentbildende Soll-Stromkomponente $i^*_q$ ansteht. Der Ausgang dieses Addierers 72 ist einerseits mit einem Eingang der Einrichtung 66 und andererseits mit den Bauelementen 42,10 und 24 dieser feldorientierten Regelung 2 verbunden.

Aus dem ermittelten Beschleunigungs-Istwert $S_{acc}$ wird mittels des Betragsbildners 76 der Beschleunigungs-Regeleinrichtung 68 der Betrag $|S_{acc}|$ gebildet, der mittels des Vergleichers 78 mit dem Betrag $|S^*_{acc}|$ eines Beschleunigungs-Grenzwertes $S^*_{acc}$ verglichen wird. Solange der Beschleunigungs-Betrags-Istwert $|S_{acc}|$ kleiner ist als der Beschleunigungs-Betrags-Grenzwert $|S^*_{acc}|$, wird eine positive Ausgangsspannung des PI-Reglers 80 wegen der Begrenzungseinrichtung 70 nicht zum Addierer 72 weitergeleitet. Ist der Beschleunigungs-Betrags-Istwert $|S_{acc}|$ größer als der Beschleunigungs-Betrags-Grenzwert $|S^*_{acc}|$, so wird die drehmomentbildende Soll-Stromkomponente $i^*_q$ solange vermindert, bis der Beschleunigungs-Betrags-Istwert $|S_{acc}|$ gleich dem Beschleunigungs-Betrags-Grenzwert $|S^*_{acc}|$ ist.

Mit dieser Beschleunigungs-Regeleinrichtung 68 wird erreicht, daß bei Lastabwurf durch die unzureichende Dynamik des PI-Reglers 38 der EMK-Regelung 14 starke Fehlorientierung dieser Regelung 2 vermieden werden.

Dem Blockschaltbild gemäß der FIG 3 ist ebenfalls zu entnehmen, daß der Einrichtung 66 zur Begrenzung des Ausgangssignals $\hat{\omega}$ des PI-Reglers 38 der EMK-Regelung 14 außerdem der Beschleunigungs-Istwert $S_{acc}$ und die drehmomentbildenden Soll-Stromkomponente $i^*_q$ zugeführt sind. Ferner ist dieser Einrichtung 66 noch eine zweite Grenzfrequenz $f_2$ zugeführt, deren Wert größer ist als der Wert der ersten Grenzfrequenz $f_1$.

Da die feldorientierte Regelung 2 mittels eines Mikroprozessors realisiert ist, werden die Bauelemente 62, 64, 66, 68, 70, 72 und 74 ebenfalls durch diesen Mikroprozessor realisiert. D.h., daß die bestehende Software für die bekannte feldorientierte Regelung 2 durch wenigstens einem Zusatzprogramm erweitert wird. Zur Realisierung der Einrichtung 66 zur Begrenzung des Ausgangssignals $\hat{\omega}$ der EMK-Regelung 14 in Abhängigkeit der Eingangssignale $S_{acc}$, $f_2$, und $i^*_q$ weist diese Einrichtung 66 die Funktionsblöcke Komparator, Vorrichtung zur gesteuerten Veränderung des Schätzwertes $\hat{\omega}$ und Recheneinheit auf. Dem Komparator sind die ermittelte Ständerfrequenz $\omega_s$ und der Wert der zweiten Grenzfrequenz $f_2$ zugeführt. Das ausgangsseitige Komparatorsignal wird der Vorrichtung zur gesteuerten Veränderung des Schätzwertes $\hat{\omega}$ zugeführt, an deren zweiten Eingang ein Beschleunigungs-Istwert $S_{acc}$ ansteht. Die Recheneinheit berechnet in Abhängigkeit des ermittelten Beschleunigungs-Istwertes $S_{acc}(f_2)$ zum Zeitpunkt der zweiten Grenzfrequenz $f_2$ und der drehmomentbildenden Soll-Stromkomponente $i^*_q$ einen Trägheitsmomenten-Istwert, der der Vorrichtung zur gesteuerten Veränderung des Schätzwertes $\hat{\omega}$ zugeführt wird. Dieser neue Trägheitsmomenten-Istwert wird dann bei der Veränderung des Schätzwertes $\hat{\omega}$ verwendet, wenn während des gesteuerten Drehzahlnulldurchgangs Sollwertänderungen in der Momentenvorgabe auftreten. Mittels dieser Recheneinheit können diese Änderungen in der Momentenvorgabe in äquivalente Beschleunigungswerte umgerechnet werden.

Bei einer dynamischen Drehrichtungsumkehr, gekennzeichnet dadurch, daß sich das Vorzeichen der Soll-Drehrichtung $S^*_{dir}$ ändert, wird, sobald die Ständerfrequenz $\omega_s$ diese zweite Grenzfrequenz $f_2$ unterschreitet, der zu diesem Zeitpunkt anstehende Trägheitsmomenten-Istwert festgehalten. In Abhängigkeit des Beschleunigungs-Istwertes $S_{acc}(f_2)$ wird der Schätzwert $\hat{\omega}$ der EMK-Regelung 14 derart gesteuert, daß der Nullpunkt durchfahren wird. Gemäß der neuen Soll-Drehrichtung $S^*_{dir}$ wird die dieser Drehrichtung entgegengesetzte Begrenzerseite dynamisch zu Null begrenzt.

Wenn beispielsweise zu einem Zeitpunkt, zu dem die Ständerfrequenz $\omega_s$ größer als der positive Wert der Grenzfrequenz $f_2$ und die Soll-Drehrichtung $S^*_{dir}$ positiv ist, ein Revasiervorgang (dynamische Drehrichtungsumkehr) einsetzt, so wechselt die Soll-Drehrichtung $S^*_{dir}$ und die drehmomentbildende Soll-Stromkomponente $i^*_q$ die Vorzeichen. Dadurch wird die Ständerfrequenz $\omega_s$ mit dem Trägheitsmomenten-Istwert und einem Momenten-Sollwert vermindert. Wird die zweite

Grenzfrequenz $f_2$ von der Ständerfrequenz $\omega_s$ unterschritten, so wird der zu diesem Zeitpunkt aktuelle Beschleunigungs-Istwert $S_{acc}$ festgehalten. In Abhängigkeit dieses Beschleunigungs-Istwertes $S_{acc}(f_2)$ wird der Schätzwert $\hat{\omega}$ derart gesteuert, daß der Nullpunkt durchlaufen wird. Da das Vorzeichen der Soll-Drehrichtung $S^*_{dir}$ negativ ist, wird die negative Begrenzung aufgehoben. Nachdem der negative Wert der Grenzfrequenz $f_2$ überschritten ist, wird die positive Begrenzung aktiviert.

Da der Beschleunigungs-Istwert $S_{acc}$ $(f_2)$ sowohl die Information über die Trägheit am Abrieb als auch das momentane Drehmoment beeinhaltet und während des gesteuerten Bereichs die Trägheit als konstant angenommen wird, treten in diesem gesteuerten Bereich keine unerwünschten Momentenänderungen auf. Aufgrund dieser Tatsache kann bei Sollwertänderungen in der Momentenvorgabe während des gesteuerten Drehzahlnulldurchgangs diese Momentenvorgabe realisiert werden. Dazu wird in Abhängigkeit der konstanten Trägheit und des neuen Drehmoments ein Beschleunigungswert errechnet, mit dem dann der Schätzwert $\hat{\omega}$ verändert wird.

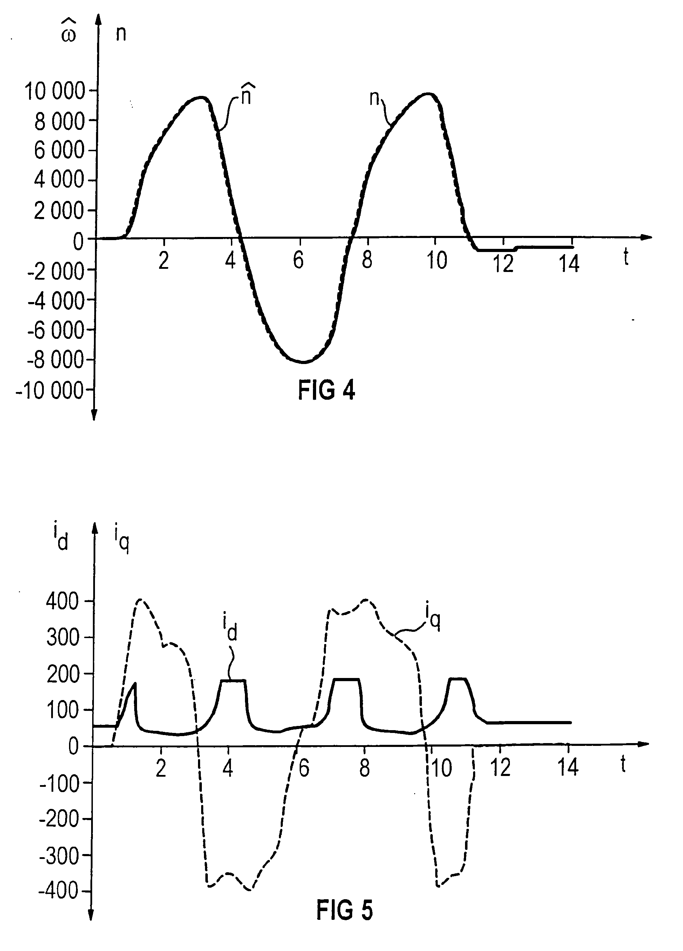

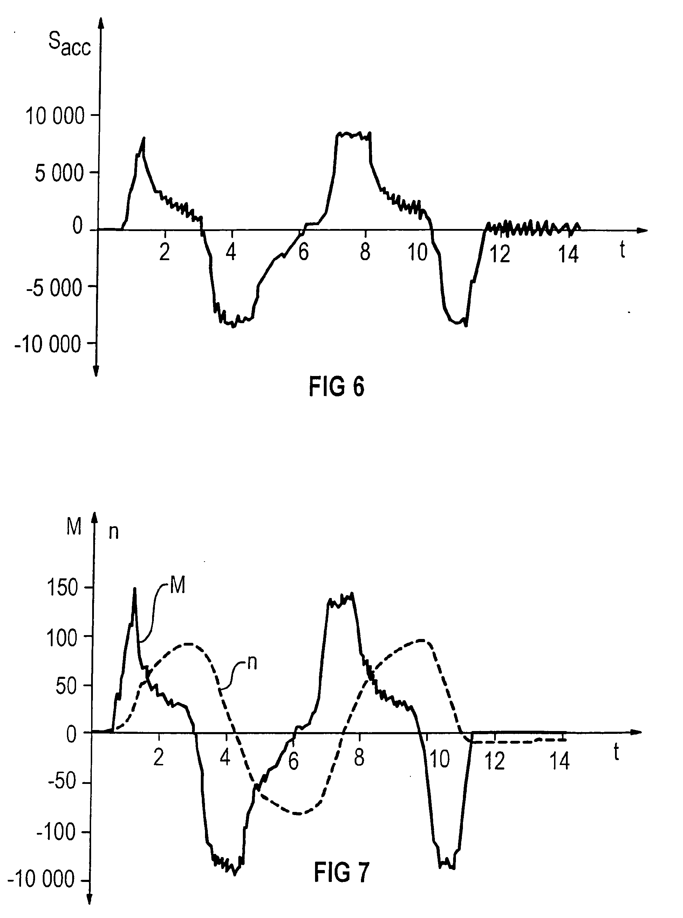

In den FIG 4 bis 7 sind verschiedene Signalvorläufe beim Anfahren, Reversieren und Bremsen für den geberlosen Betrieb einer feldorientiert betriebenen Asynchronmaschine veranschaulicht. Die Messungen sind bei unbelasteter Maschine mit maximalem Sollmoment durchgeführt und zeigen somit die größte auftretende Beschleunigung für den verwendeteten Motor.

Mit dem erfindungsgemäßen Verfahren und deren vorteilhaften Ausgestaltungen erhält man eine feldorientierte Regelung der Drehzahl einer Asynchronmaschine ohne Geber, mit der bis zum Stillstand sanft verzögert und aus diesem Stillstand angefahren werden kann. Außerdem wird ein Reversieren ohne unerwünschte Momentenänderungen ermöglicht.

**Patentansprüche**

1. Verfahren zur Regelung einer geberlosen, feldorientiert betriebenen Asynchronmaschine, wobei mittels einer Zweikomponenten-Stromregelung ein feldorientierter Stellgrößen-Raumzeiger ($|\underline{u}|$, $\varepsilon_u$) generiert wird, wobei mittels eines EMK-Rechners (8) eine d-Komponente ($e_d$) eines berechneten EMK-Raumzeigers ($|\underline{e}|$) ermittelt wird, wobei in Abhängigkeit dieser d-Komponente ($e_d$) mittels einer EMK-Regelung (14) mit einem PI-Regler (38) ein Schätzwert ($\hat{\omega}$) der Geschwindigkeit der Asynchronmaschine ermittelt wird, der mit einer errechneten Schlupffrequenz ($\dot{\omega}_r$) zu einer Ständerfrequenz ($\omega_s$) aufaddiert wird, wobei die Ständerfrequenz ($\omega_s$) bzw. der aus ihr errechnete Flußwinkel ($Y_S$) zur Transformation des feldorientierten Stellgrößen-Raumzeigers ($|\underline{u}|$, $\varepsilon_u$) in einen ständerorientierten Stellgrößen-Raum-

zeiger ($|\underline{u}|$, $\alpha_u$) dient, aus dem Ansteuersignale ($S_1$..., $S_6$) bestimmt werden **dadurch gekennzeichnet, dass** bei einer Ständerfrequenz ($\omega_s$) kleiner gleich einer ersten Grenzfrequenz ($f_1$) der PI-Regler (38) deaktiviert und sein Ausgangssignal ($\hat{\omega}$) stetig zu Null gesetzt wird, wobei die erste Grenzfrequenz ($f_1$) sehr viel kleiner ist als ein Nennschlupf ($s_n$) der geberlosen, feldorientiert betriebenen Asynchronmaschine.

2. Verfahren nach Anspruch 1, wobei das Ausgangssignal ($\hat{\omega}$) der EMK-Regelung (14) bei einer Ständerfrequenz ($\omega_s$) größer der ersten Grenzfrequenz ($f_1$) abhängig von einer Soll-Drehrichtung ($S^*_{dir}$) einseitig auf Null begrenzt wird.

3. Verfahren nach Anspruch 1, wobei die drehmomentbildende Soll-Stromkomponente ($i^*_q$) in Abhängigkeit einer ermittelten Abweichung eines Beschleunigungs-Betrags-Istwertes ($|S_{acc}|$) von einem Beschleunigungs-Betrags-Grenzwert ($|S^*_{acc}|$) vermindert wird.

4. Verfahren nach Anspruch 1, wobei bei Umkehrung der Soll-Drehrichtung ($S^*_{dir}$) ab einer zweiten Grenzfrequenz ($f_2$), deren Wert größer ist als der Wert der ersten Grenzfrequenz ($f_1$), die Drehzahl Null gesteuert durchfahren wird, wobei der Schätzwert ($\hat{\omega}$) der Drehzahl in Abhängigkeit des bei der zweiten Grenzfrequenz ($f_2$) ermittelten Trägheitsmomenten-Istwertes und eines Momenten-Sollwertes verändert wird.

5. Verfahren nach Anspruch 4, wobei während des gesteuerten Drehzahl-Nulldurchgangs Sollwertänderungen in der Momentenvorgabe in äquivalente Beschleunigungs-Istwerte umgerechnet werden.

6. Verfahren nach Anspruch 3 oder 4, wobei der Beschleunigungs-Betrags-Istwert ($|S_{acc}|$) aus einer d-Komponente ($e_d$) eines ermittelten EMK-Raumzeigers ($\underline{e}$) bestimmt wird.

7. Vorrichtung zur Durchführung des Regelverfahrens nach Anspruch 1 mit einer feldorientierten Regelung (2), einem Raumzeiger-Modulator (4) und einer Einrichtung zur Bestimmung der Ständerfrequenz ($\omega_s$) für eine geberlose, feldorientiert betriebenen Asynchronmaschine, wobei diese Einrichtung eine EMK-Regelung (14), einen Multiplizierer (42) und einen Addierer (40) aufweist, wobei diese EMK-Regelung (14) ausgangsseitig mit dem ersten Eingang des Addierers (40) und der Isteingang der EMK-Regelung (14) mit einem d-Komponenten-Ausgang eines EMK-Rechners (8) der feldorientierten Regelung (2) verknüpft sind, wobei der zweite Eingang des Addierers (40) mit dem Ausgang des Multiplizierers (42) verbunden ist, an dessen Eingängen eine drehmomentbildende Soll-Stromkomponente ($i^*_q$) und ein Quotient aus Rotorwiderstand ($R_r$) und Soll-Fluß ($\Psi^*$) anstehen, wobei der Ausgang des Addierers (40) mit dem Frequenz-Eingang des Raumzeiger-Modulators (4) verbunden ist **dadurch gekennzeichnet, dass** bei ein Komparator (62) vorgesehen ist, an dessen Eingängen eine erste Grenzfrequenz ($f_1$) und die ermittelte Ständerfrequenz ($\omega_s$) anstehen und der ausgangsseitig mit einer Vorrichtung (64) zur Deaktivierung des PI-Reglers (38) der EMK-Regelung (14) und zur stetigen Herabsetzung seines Ausgangssignals auf Null verbunden ist.

8. Vorrichtung nach Anspruch 7, wobei der EMK-Regelung (14) einer Einrichtung (66) zur Begrenzung des Ausgangssignals ($\omega$) des PI-Reglers (38) der EMK-Regelung (14) mit einstellbaren positiven und negativen Grenzwerten nachgeschaltet ist, der eine Soll-Drehrichtung ($S^*_{dir}$) zugeführt ist.

9. Vorrichtung nach Anspruch 7, wobei ein Beschleunigungs-Regeleinrichtung (68) vorgesehen ist, die einen Betragsbildner (76), einen Vergleicher (78) und einen PI-Regler (80) aufweist, die einander nachgeschaltet sind, wobei der d-Komponenten-Ausgang des EMK-Rechners (8) mittels einer Umrechnungs-Einrichtung (74) mit dem Eingang des Betragsbildners (76) der Beschleunigungs-Regeleinrichtung (68) verbunden ist, wobei am nichtinvertierenden Eingang des Vergleichers (78) der Beschleunigungs-Regeleinrichtung (68) ein Beschleunigungs-Betrags-Grenzwert ($|S^*_{acc}|$) ansteht, wobei der Ausgang des PI-Reglers (80) der Beschleunigungs-Regeleinrichtung (68) mittels einer einseitigen Begrenzereinrichtung (70) mit einem Addierer (72) verbunden ist, an dessen zweiten Eingang eine drehmomentbildende Soll-Stromkomponente ($i^*_q$) ansteht und wobei das Ausgangssignal dieses Addierers (72) der feldorientierten Regelung (2) und der Einrichtung zur Bestimmung der Ständerfrequenz ($\omega_s$) als korrigierte drehmomentbildende Soll-Stromkomponente dient.

10. Vorrichtung nach Anspruch 7, wobei die Einrichtung (66) zur Begrenzung des Ausgangssignals ($\hat{\omega}$) der EMK-Regelung (14) einen Komparator aufweist, an dessen Eingängen eine zweite Grenzfrequenz ($f_2$) und die ermittelte Ständerfrequenz (($\omega_s$) anstehen, und wobei die Einrichtung (66) eine Vorrichtung zur gesteuerten Veränderung des Schätzwertes ($\hat{\omega}$) der Drehzahl aufweist, der eingangsseitig ein Komparatorsignal und ein Beschleunigungs-Istwert ($S_{acc}$) zugeführt sind.

11. Vorrichtung nach Anspruch 10, wobei die Einrichtung (66) zur Begrenzung des Ausgangssignals ($\hat{\omega}$) der EMK-Regelung (14) eine Recheneinheit aufweist, der die drehmomentbildende Soll-Stromkomponente ($i^*_q$) zugeführt ist, und wobei am Ausgang dieser Recheneinheit ein Beschleunigungswert ansteht, der der Vorrichtung zur gesteuerten Veränderung des Schätzwertes ($\hat{\omega}$) der Drehzahl zugeführt wird.

12. Vorrichtung nach einem der Ansprüche 7 bis 11, wobei für die feldorientierte Regelung (2) ein Mikroprozessor vorgesehen ist.

## Claims

1. Method for controlling a sensorless, field-oriented asynchronous machine, with a two-component current control system being used to generate a field-oriented manipulated variable space vector ($|\underline{u}|$, $\varepsilon_u$), with an EMF computer (8) being used to determine a d-component ($e_d$) of a calculated EMF space vector $|\underline{e}|$, with an EMF control system (14) with a PI controller (38) being used to determine an estimated value ($\hat{\omega}$) of the velocity of the asynchronous machine as a function of said d-component ($e_d$), said estimated value ($\hat{\omega}$) being added to a calculated slip frequency ($\omega^*_r$) to give a stator frequency ($\omega_s$), with the stator frequency ($\omega_s$) or the flux angle ($Y_s$) calculated therefrom serving to transform the field-oriented manipulated variable space vector ($|\underline{u}|$, $\varepsilon_u$) into a stator-oriented manipulated variable space vector ($|\underline{u}|$, $\alpha_u$), from which control signals ($S_1$, ..., $S_6$) are determined, **characterised in that** when the stator frequency ($\omega_s$) is less than or equal to a first limit frequency ($f_1$), the PI controller (38) is deactivated and its output signal ($\hat{\omega}$) is continuously reduced to zero, with the first limit frequency ($f_1$) being substantially less than a nominal slip ($S_n$) of the sensorless, field-oriented asynchronous machine.

2. Method according to claim 1, with the output signal ($\hat{\omega}$) of the EMF control system (14) being limited to zero on one side, when the stator frequency ($\omega_s$) is greater than the first limit frequency ($f_1$), as a function of a setpoint rotational direction ($S^*_{dir}$).

3. Method according to claim 1, with the torque-forming setpoint current component ($i^*q$) being reduced as a function of a determined deviation of an actual acceleration absolute value ($|S_{acc}|$) from an acceleration absolute value limit value ($|S^*_{acc}|$).

4. Method according to claim 1, with zero rotational speed being passed through in a controlled manner when the setpoint rotational direction ($S^*_{dir}$) is reversed from a second limit frequency ($f_2$), the value of which is greater than the value of the first limit frequency ($f_1$), with the estimated value ($\hat{\omega}$) of the rotational speed being changed as a function of the actual value of the moment of inertia determined at the second limit frequency and a setpoint torque value.

5. Method according to claim 4, with setpoint value changes in the predetermined torque being converted to equivalent actual acceleration values during the controlled transition through zero rotational speed.

6. Method according to claim 3 or 4, with the actual acceleration absolute value ($|S_{acc}|$) being determined from a d-component ($e_d$) of a determined EMF space vector ($\underline{e}$).

7. Device for implementing the control method according to claim 1 with a field-oriented control system (2), a space vector modulator (4) and a facility for determining the stator frequency ($\omega_s$) for a sensorless, field-oriented asynchronous machine, said facility having an EMF control system (14), a multiplier (42) and an adder (40), with said EMF control system (14) being coupled on the output side to the first input of the adder (40) and the actual input of the EMF control system (14) being coupled to a d-component output of an EMF computer (8) of the field-oriented control system (2), with the second input of the adder (4) being connected to the output of the multiplier (42), at whose inputs a torque-forming setpoint current component ($i^*_q$) and a quotient of rotor resistance ($R_r$) and setpoint flux ($\Psi^*$) are present, with the output of the adder (40) being connected to the frequency input of the space vector modulator (4), **characterised in that** a comparator (62) is provided, at whose inputs a first limit frequency ($f_1$) and the determined stator frequency ($\omega_s$) are present, and which is connected on the output side to a device (64) for deactivating the PI controller (38) of the EMF control system (14) and for continuously reducing its output signal to zero.

8. Device according to claim 7, with a facility (66) being connected downstream of the EMF control system (14) for limiting the output signal ($\omega$) of the PI controller (38) of the EMF control system (14) with adjustable positive and negative limit values, to which a setpoint rotational direction ($S^*_{dir}$) is supplied.

9. Device according to claim 7, with an acceleration control facility (68) being provided, having an absolute value former (76), a comparator (78) and a PI controller (80), which are connected downstream of each other, with the d-component output of the EMF computer (8) being connected by means of a conversion facility (74) to the input of the absolute value former (76) of the acceleration control facility (68), with an acceleration absolute value limit value ($|S^*_{acc}|$) being present at the noninverting input of the comparator (78) of the acceleration control facility (68), with the output of the PI controller (80) of the acceleration control facility (68) being connected on the one side by means of a limiting facility (70) to an adder (72), at whose second input a torque-forming setpoint current component ($i^*q$) is present, with the output signal of said adder (72) being used by the field-oriented control system (2) and the facility for determining the stator frequency ($\omega_s$) as a corrected torque-forming setpoint current component.

10. Device according to claim 7, with the facility (66) for limiting the output signal ($\hat{\omega}$) of the EMF control system (14) having a comparator, at whose inputs a second limit frequency ($f_2$) and the determined stator frequency ($\omega_s$) are present, and with the facility (66) having a device for controlled modification of the estimated value ($\hat{\omega}$) of the rotational speed, to whose input a comparator signal and an actual acceleration value ($S_{acc}$) are supplied.

11. Device according to claim 10, with the facility (66) for limiting the output signal ($\hat{\omega}$) of the EMF control system (14) having a computation unit, to which the torque-forming setpoint current component ($i^*_q$) is supplied and with an acceleration value being present at the output of said computation unit, which is supplied to the device for controlled modification of the estimated value ($\hat{\omega}$) of the rotational speed.

12. Device according to one of claims 7 to 11, with a microprocessor being provided for the field-oriented control system (2).

**Revendications**

1. Procédé pour la régulation d'une machine asynchrone sans capteur commandée avec orientation par champ, dans lequel, au moyen d'une régulation de courant à deux composants, on génère un vecteur tridimensionnel ($|u|, \varepsilon_u$) cependant qu'au moyen d'un calculateur de f.e.m. (8), on obtient une composante ($e_d$) d'un vecteur tridimensionnel de f.e.m. calculé ($|\underline{u}|, \varepsilon_u$), cependant qu'en fonction de cette composante ($e_d$), on calcule au moyen d'une régulation de f.e.m. (14) comprenant un régulateur PI (38), une valeur estimée ($\hat{\omega}$) de la vitesse de la machine asynchrone qui est additionnée à une fréquence de glissement calculée ($\omega^*_r$) pour obtenir une fréquence de stator ($\omega_s$), la fréquence de stator ($\omega_s$) ou l'angle de flux ($Y_s$) calculé à partir de cette fréquence sert pour la transformation du vecteur tridimensionnel ($|u|, \varepsilon_u$) de grandeur réglante orienté par champ en un vecteur tridimensionnel ($|u|, \alpha_u$) grandeur réglante orientée par le stator, à partir duquel sont déterminés des signaux de pilotage ($S_1..., S_6$), **caractérisé en ce que**, à une fréquence de stator ($\omega_s$) inférieure ou

égale à une première fréquence limite ($f_1$), le régulateur PI (38) est désactivé et son signal de sortie ($\hat{\omega}$) est mis en permanence à zéro, la première fréquence limite ($f_1$) étant beaucoup plus petit qu'un glissement nominal ($s_n$) de la machine asynchrone sans capteur commandée avec orientation par champ.

2. Procédé selon la revendication 1, dans lequel le signal de départ ($\hat{\omega}$) de la régulation de f.e.m. (14) est limité unilatéralement à zéro en présence d'une fréquence de stator ($\omega_s$) supérieure à la première fréquence limite ($f_1$) en fonction d'un sens de rotation de consigne ($S^*_{dir}$).

3. Procédé selon la revendication 1, dans lequel la composante de courant de consigne ($i^*_q$) qui forme le couple est diminuée en fonction d'un écart déterminé d'une valeur réelle absolue d'accélération ($|S_{acc}|$) d'une valeur limite absolue d'accélération ($|S^*_{acc}|$) .

4. Procédé selon la revendication 1, dans lequel en présence d'une inversion du sens de rotation de consigne ($S^*_{dir}$), à partir d'une seconde fréquence limite ($f_2$), dont la valeur est supérieure à la valeur de la première fréquence limite ($f_1$), la vitesse de rotation zéro est franchie de façon commandée, la valeur estimée ($\hat{\omega}$) de la valeur étant modifiée en fonction de la valeur réelle du moment d'inertie déterminé lors de la seconde fréquence limite ($f_2$) et d'une valeur de consigne du moment.

5. Procédé selon la revendication 4, dans lequel, pendant le passage par zéro commandé de la vitesse de rotation, des variations de la valeur de consigne dans la prescription de moment sont converties en valeurs réelles équivalentes de l'accélération.

6. Procédé selon la revendication 3 ou 4, dans lequel la valeur réelle absolue de l'accélération ($|S_{acc}|$) est déterminée à partir d'une composante ($e_d$) d'un vecteur tridimensionnel de f.e.m. déterminé (e).

7. Dispositif pour la mise en oeuvre du procédé de régulation selon la revendication 1 comprenant une régulation orientée par champ (2), un modulateur de vecteur tridimensionnel (4) et un dispositif pour la détermination de la fréquence de stator ($\omega_s$) pour une machine asynchrone sans capteur commandée avec orientation par champ, dans lequel ce dispositif comprend une régulation de f.e.m. (14), un multiplicateur (42) et un additionneur (40), cette régulation de f.e.m. (14) étant combinée, côté sortie, avec la première entrée de l'additionneur d'un calculateur de f.e.m. (8) de la régulation orientée par champ (2), la seconde entrée de l'additionneur (40) étant connectée à la sortie du multiplicateur (42) aux entrées duquel sont appliquées une composante de courant de consigne formant le couple ($1^*_q$) et un quotient de la division de la résistance du rotor ($R_r$) et par le flux de consigne ($\psi^*$), la sortie de l'additionneur (40) étant connectée à l'entrée de fréquence du modulateur de vecteur tridimensionnel (4), **caractérisé en ce qu'**il est prévu un comparateur (62) aux entrées duquel sont appliquées une première fréquence limite ($f_1$) et la fréquence de stator déterminée ($\omega_s$), et qui est connecté, côté sortie à un dispositif (64) destiné à la désactivation du régulateur PI (38) de la régulation de f.e.m. (14) et à l'abaissement à zéro en permanence de son signal de sortie.

8. Dispositif selon la revendication 7, dans lequel, en aval de la régulation de f.e.m. (14) est connecté un dispositif (66) servant à la limitation du signal de sortie ($\omega_s$) du régulateur PI (38) de la régulation def.e.m. (14), possédant des valeurs limites positive et négative réglables, et qui reçoit un sens de rotation de consigne ($S^*_{dir}$).

9. Dispositif selon la revendication 7, dans lequel il est prévu un dispositif de régulation d'accélération (68) qui présente un formateur de valeur absolue (76), un comparateur (78) et un régulateur PI (80) qui sont connectés l'un à la suite de l'autre, la sortie de composante $\underline{d}$ du régulateur de f.e.m. (8) étant connectée au moyen d'un dispositif de conversion (74) à l'entrée du formateur de valeur absolue (76) du dispositif de régulation d'accélération (68), cependant qu'à l'entrée non inverseuse du comparateur (78) du dispositif de régulation d'accélération (68), est appliquée une valeur limite de valeur absolue de l' accélération ($|S_{acc}|$), la sortie du régulateur PI (80) du dispositif de régulation d'accélération (68) étant connectée au moyen d'un dispositif limiteur unilatéral (70) à l'additionneur (72) à la deuxième entrée duquel est appliquée une composante de courant de consigne de formation de couple ($i^*_q$), et le signal de sortie de cet additionneur (72) servant à la régulation orienté par champ (2) et au dispositif pour la détermination de la fréquence de stator ($\omega_s$) en tant que composante de courant de consigne de formation de couple corrigée.

10. Dispositif selon la revendication 7, dans lequel le dispositif (66) pour la limitation du signal de sortie ($\hat{\omega}$) de la régulation de f.e.m. (14) présente un comparateur aux entrées duquel sont appliquées une seconde fréquence limite ($f_2$) et la fréquence de stator obtenue ($\omega_s$) et dans lequel le dispositif (66) présente un dispositif pour la variation commandée de la valeur estimée ($\hat{\omega}$) de la vitesse de rotation, auquel, côté entrée, sont transmis un signal de comparateur et une valeur réelle d'accélération ($S_{acc}$).

11. Dispositif selon la revendication 10, dans lequel le

dispositif (66) pour la limitation du signal de sortie ($\hat{\omega}$) de la régulation de f.e.m. (14) présente une unité de calcul à laquelle est transmise la composante de courant de consigne de formation de couple ($i^*_q$), et dans lequel, à la sortie de cette unité de calcul, apparaît une valeur d'accélération qui est transmise au dispositif pour la variation commandée de la valeur estimé ($\hat{\omega}$) de la vitesse de rotation.

12. Dispositif selon une des revendications 7 à 11, dans lequel il est prévu un microprocesseur pour la régulation orientée par champ (2).

**FIG 1**

**FIG 2**

FIG 3

FIG 4

FIG 5

FIG 6

FIG 7

EP 0 884 835 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9503649 A

- EP 0633653 A1

**In der Beschreibung aufgeführte Nicht-Patentliteratur**

- Feldorientierung der geberlosen Drehfeldmaschine. *abgedruckt in der DE-Zeitschrift ''etz,* 1995, vol. 21, 14-23

- High-Dynamic AC maschine control without speed or position sensor. *abgedruckt in der Zeitschrift ''ETEP,* Januar 1996, vol. 6 (1), 47-51